# EUROPEAN PATENT SPECIFICATION

(11) **EP 1 571 096 B1**
(45) Date of publication and mention of the grant of the patent: **13.11.2013**
(21) Application number: 05075494.4
(22) Date of filing: 04.03.2005
(51) Int. Cl.: B65D 19/38, B65D 88/12, B65D 19/08

(54) **A transport system**
Transportsystem
Système de transport.

(30) Priority: 05.03.2004 GB 0404983
(43) Date of publication of application: 07.09.2005
(73) Proprietor: Malachy, Hughes, Dungannon BT70 1TA (GB)
(72) Inventor: Malachy, Hughes, Dungannon BT70 1TA (GB)
(74) Representative: O'Neill, Brian

(56) References cited:
- EP-A- 0 736 457
- EP-A- 1 204 573
- EP-A- 1 360 124
- FR-A- 2 075 836
- GB-A- 1 218 235

## Description

The present invention relates to a transport system, and in particular a transport system for use with gas cylinders such as low pressure gas (LPG) cylinders.

Conventionally, LPG cylinders are individually stacked onto trailers. A base layer is initially laid, onto the top of which a number of wooden battons are laid, such that a second layer of LPG cylinders can be stacked on top of the base layer. This process may then be repeated until the trailer has been filled or the desired number of LPG cylinders has been loaded. Typically, the trailer is cage-like in construction and has gates along its side and rear so that the cylinders can be loaded on and off the trailer from any point.

The main problem with this arrangement is the time and effort taken to load and unload the trailer. Each cylinder is loaded on and off the trailer manually, and this will often require two men, one standing on the trailer passing the LPG cylinders down to another man located on the ground, or *vice versa.* Another problem arises because of the batton system used to space adjacent layers of cylinders. On occasion, when the gates of the trailer are opened, a number of these cylinders can topple off the trailer and injure the workers.

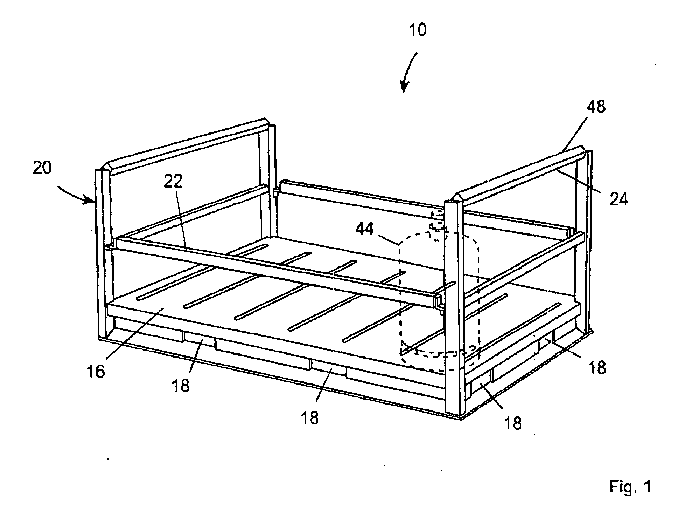

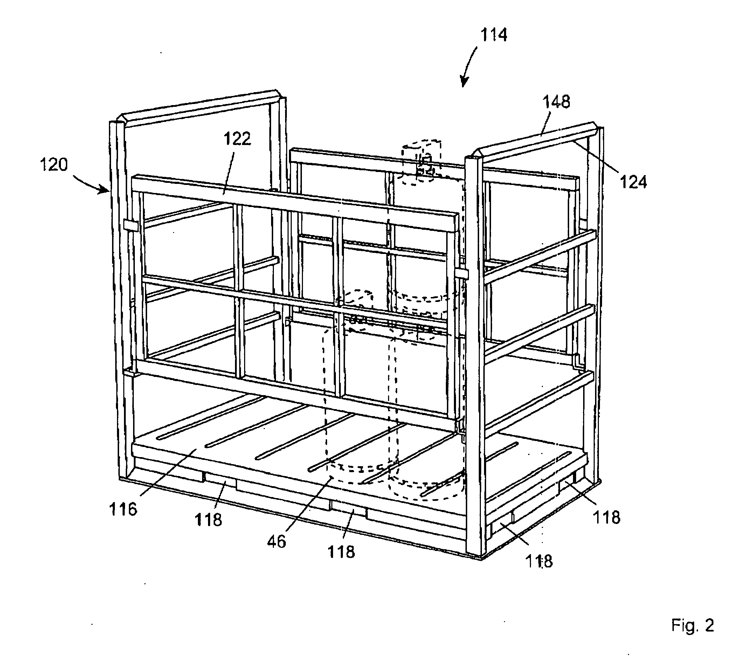

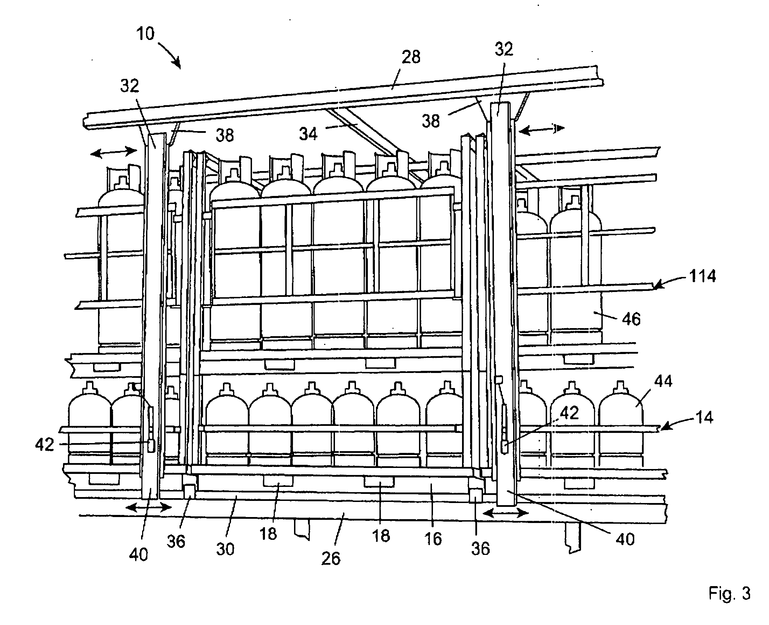

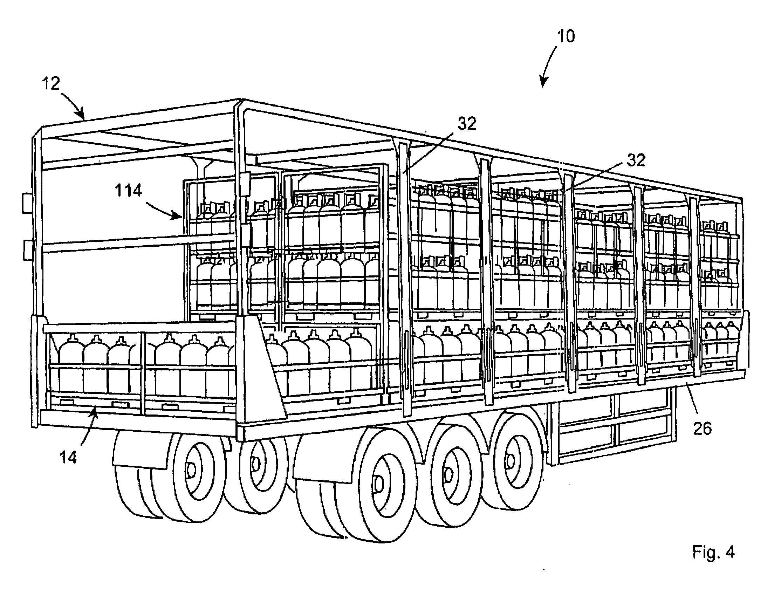

EP-A-1204573 discloses a freight container having a base 2 and roof 5 is provided with fitting means 8 and 9 on the roof and a movable support strut 24. The support strut 24 is provided and can be moved from a loading position (Fig 2) to a load bearing position (Fig 1) between filling means 8 and 9 and the container base 5. The support strut 24 can be hingedly fixed to a corner post 21 of the container. The support strut can be part of a gate 20 hingedly fixed to a corner post. The support strut 24 may be substantially vertical. Locking means (Fig 4-6) are provided to lock the support strut 24 in the load bearing position. The fitting means 8 and 9 on the roof are provided to allow the container to be lifted and/or stacked (Fig 8-11). Two fitting means 8 and 9 are provided on each side wall and fixed proximate a junction of the roof 5 and side walls 3 and 4 of the container and separated by a predetermined distance of less than the side wall of the container, preferably 12.2m- A roof beam (12, Fig 3) may be provided to connect fitting means on opposed sidewalls.

It is therefore an object of the present invention to provide a transport system having greater efficiency and safety than the system of the prior art.

It is a further object of the present invention to provide such an improved transport system which is nevertheless cage like in form such as to comply with the legal requirements for the transport of gas containers.

The present invention therefore provides a transport system according to claim 1.

Preferably, each cage comprises a base defining at least a pair of channels shaped and dimensioned for receiving a pair of tines of a forklift.

Preferably, each cage comprises a frame extending from the base, at least one upper edge of the frame having one of a male or a female member, and a corresponding other of the male or female member is provided on an underside of the base.

Preferably, each pair of male and female members are self aligning.

Preferably, the male and female members each have a substantially V shaped cross section.

Preferably, the frame may be opened outwardly on at least one side of the cage.

Preferably, the enclosure comprises at least a pair of opposing uprights independently moveable relative to the platform.

Preferably, the enclosure comprises an upper rail and a lower rail, each of which rails are disposed substantially parallel to the platform, the or each upright being slidably mounted to the upper and the lower rail.

Preferably, the enclosure comprises a pair of opposed upper rails and a pair of opposed lower rails.

Preferably, the or each lower rail is formed integrally with the platform.

Preferably, the or each upright may be locked in position relative to the platform.

Preferably, the retaining means comprises at least a pair of dividers projecting upwardly from the platform.

Preferably, the enclosure is mobile.

Preferably, the enclosure is a vehicular trailer.

As used herein, the term "cage" is intended to mean any enclosure which is capable of retaining one or more objects therein, which cage need not be closed on all sides, and which is preferably comprised of substantially open framework, but could equally comprise one or more substantially solid surfaces such as to be in the form of a box or the like.

As used herein, the term "container" is intended to mean a vessel capable of retaining a fluid therein, and is particularly intended to mean a pressure tight vessel such as a gas cylinder or the like.

As used herein, the term "upright" is intended to mean a beam or post or the like, which need not be disposed in a vertical orientation, but which in use is preferably substantially vertically disposed.

As used herein, the term "channel" is intended to mean an open or closed recess or aperture which is capable of receiving a forklift tine or the like, which channel could be formed integrally with a body as a through or blind aperture, or could be formed as a depression in a surface of a body.

As used herein, the term "self aligning" is intended to mean the ability of two co-operating components such as male and female components, to substantially align and locate themselves in complete engagement with one another once brought into initial alignment with one another, this self alignment preferably but not essentially being aided by gravity forcing the co-operating components together.

The present invention will now be described with reference to the accompanying drawings, in which:
Figure 1 illustrates a perspective view of a preferred embodiment of a cage forming part of the transport system of the present invention;
Figure 2 illustrates an alternative embodiment of the cage shown in Figure 1, which cage is twice the height of the cage shown in Figure 1;
Figure 3 illustrates a perspective view of part of a preferred embodiment of a trailer forming part of the transport system of the present invention, onto which trailer a plurality of the cages of Figure 1 and 2 may be loaded and secured for transport; and
Figure 4 illustrates a perspective view of the trailer of Fig. 3, which trailer is almost entirely filled with the cages of Figs.1 and 2.

Referring now to the accompanying drawings, there is illustrated a transport system, generally indicated as 10, for particular use in loading, transporting and/or storing, in safety and with greater efficiency than was previously possible, large numbers of objects, in particular containers such as gas cylinders which, in the preferred embodiment illustrated, take the form of conventional cylinders 44 and elongate cylinders 46. It will however be appreciated that the system 10 could be adapted for use with any number of other objects or containers (not shown).

The system 10 consist primarily of a preferably mobile enclosure in the form of a trailer 12, in addition to a variety of cages, and in the preferred embodiment illustrated, a conventional cage 14 and an elongate cage 114, for use with the conventional cylinders 44 and the elongate cylinders 46 respectively. In use, a plurality of the cages 14, 114 are loaded onto, and secured within, the trailer 12, as will be described in greater detail hereinafter. The conventional cages 14 and elongate cages 114 are similar in configuration and operation, and thus like components have been accorded like reference numerals, and unless otherwise stated, perform a like function. The primary difference between the conventional cage 14 and the elongate cage 114 is the difference in height, the elongate cage 114 being approximately twice the height of the conventional cage 14 in order to be capable of housing the elongate cylinders 46.

Turning firstly to Figure 1, the conventional cage 14 comprises a pallet-like base 16 having four sides, a top surface and an underside, the base 16 preferably being formed from box section aluminium, or any other suitable material. Extending from the extremity of the base 16 is a frame 20, again preferably formed from aluminium or the like, the frame 20 extending above the tops of the conventional cylinders 44, the reason for which will be described in detail hereinafter. The frame 20 again has four sides, corresponding to those of the base 16. The conventional cage 14 includes a gate 22 removably secured thereto, which gate 22, upon removal, facilitates ease of loading of the conventional cage 14 with the conventional cylinders 44. Once the conventional cage 14 has been filled with the conventional cylinders 44, the gate 22 is replaced and secured in place on the frame 20, in order to prevent the conventional cylinders 44 from falling from the conventional cage 14, in particular during transit.

The base 16 includes at least one pair, and in the embodiment illustrated, two pairs, of channels 18 extending internally thereof. The channels 18 are shaped and dimensioned to receive the tines (not shown) of a forklift (not shown) or the like, in order to manoeuvre the filled (or empty) cages 14 onto or off the trailer 12, as described in detail hereinafter. However, alternative means could be provided to facilitate lifting of the cage 14, 114 for loading and/or unloading purposes. For example, the cage 14, 114 could be provided with one or more suitably located lifting eyes (not shown) in order to allow the cage 14, 114 to be lifted and manoeuvred using a crane or the like.

The frame 20 incorporates a pair of opposed cross-beams 24 which are disposed just above the top of the conventional cylinders 44, such as to define a pair of upper edges of the frame 20. The pair of cross-beams 24 therefore allow two or more cages 14 to be stacked one on top of the other, in particular on the trailer 12, although additionally at a depot (not shown) or similar storage facility. To further enhance the stacking capabilities of the cages 14, a male member 48 is formed integrally with the upper surface of each cross beam 24, and in the preferred embodiment illustrated is triangular or V shaped in cross-section. The underside of each base 16 is therefore provided with a correspondingly shaped and located female member or recess (not shown), into which the male member 48 is engaged when one cage 14 is stacked on top of another. It will therefore be appreciated that the interlocking configuration of the male members 48 and the corresponding female members (not shown) provide increased stability to two or more cages 14 stacked one on top of the other. This is particularly advantageous when transporting the filled cages 14 on the trailer 12, but additionally if the filled cages 14 are stacked for storage at an outdoor depot or the like, and consequently exposed to high winds or minor collisions by forklifts or other vehicles or machinery.

It should be apparent that the positions of the male members 48 and the female members (not shown) could be reversed, such that the male members 48 were provided on the underside of the base 16, with each female member (not shown) being provided as a respective V-shaped channel or groove (not shown) formed in the upper surface of each cross beam 24. It will also be apparent that the male members 48 and female members (not shown) could be of any suitable interlocking form. For example, each male member 48 could be in the form of one or more upstanding studs (not shown), cylindrical or otherwise, with the female member (not shown) then taking the form of a correspondingly shaped and dimensioned aperture (not shown) for receiving said stud. However, the use of the V-shaped cross section for both the male member 48 and the female member (not shown) allows for greater tolerances when aligning one cage 14 on top of another cage 14 for stacking, as the V-shaped male member 48 and female member (not shown) will tend to guide one another into the fully engaged position, in particular under the influence of gravity acting to force the upper cage 14 downwardly onto the lower cage 14, thereby facilitating the self alignment of the cages 14.

Referring now to Figure 2, the elongate cages 114 again include a pallet-like base 116, from the periphery of which extends a frame 120. The base incorporates two pairs of channels 118, and the frame 120 is provided with a releasably secured gate 122 in order to facilitate the filling of the cage 114. It will be appreciated that the gate 122 could be omitted, with the cage 114 then being loaded from the open top thereof.

Each frame 120 again includes a pair of opposed cross-beams 124, atop each of which is located a male member 148. The comments made above with respect to the positioning and configuration of the male members 48 and corresponding female members (not shown) of the conventional cage 14 also apply to the elongate cage 114.

Referring now to Figure 3, the trailer 12 consists of a platform 26 having four sides, which platform 26, in the preferred embodiment illustrated, is the bed of the trailer 12, extending upwardly from either side of which are a plurality of uprights 32, preferably formed from box section steel or aluminium or any other suitable material. The trailer 12 further includes a pair of oppositely disposed upper rails 28 to which each of the uprights 32 are slidably mounted. Extending between the pair of upper rails 28 are a plurality of cross-members 34, increasing the structural integrity of the trailer 12. It can therefore be seen that the trailer 12 is cage-like in form, comprising the platform 26 and the associated superstructure mounted thereon, which is of great importance, as it is illegal to transport gas canisters or containers such as the conventional cylinders 44 and elongate cylinders 46 in an enclosed load area, due to the dangers associated with an accumulation of explosive gas resulting from a leaking canister or canisters. It is for this reason that the cages 14, 114 are formed of open framework, in order to prevent a build up of explosive and/or poisonous gas in the event of a leaking cylinder 44, 46. It should thus be appreciated that if the system 10 is to be employed for the transport/storage of items or objects (not shown) which do not have such safety concerns, the cages 14, 114 could be box like in form, having solid sides and/or a solid top.

The platform 26 of the trailer 12 also preferrably includes retaining means in the form of a number of spaced apart dividers 36 which are arranged to receive the base 16,116 of the cages 14,114 therebetween, such as to prevent the cages 14,114 from sliding about on the platform 26 during transit. The retaining means could however be of any suitable form. For example, the surface of the platform 26 could be provided with a plurality of upstanding V shaped ridges (not shown) extending transversely across the platform 26, having the same shape and configuration as the male members 48, 148. In this way the cages 14, 114 could then be seated onto a pair of the V shaped ridges (not shown), to be received in the female members (not shown) on the underside of the base 16, 116, in the same way as the cages 14, 114 may be stacked on top of one another.

Formed integrally with the platform 26, on either side thereof, is a lower rail 30 to which each upright 32 is slidably secured. Each upright 32 includes an upper coupling 38 which incorporates a conventional roller mechanism (not shown) which is slidably mounted to the respective upper rail 28, while each upright 32 further includes a lower coupling 40 which again includes a conventional roller or other mechanism (not shown) which is slidably mounted to the respective lower rail 30. Thus, it will be appreciated that each upright 32 may be displaced along the length of the trailer 12 on the respective upper rail 28 and lower rail 30. Each upright 32 also includes a locking member 42 which is operable to lock the upright 32 relative to the respective upper rail 28 and lower rail 30.

Thus, in loading (or unloading) the trailer 12, a forklift first picks up one of the cages 14,114 and approaches the trailer 12 from the side or rear thereof. In approaching from the side of the trailer 12, the cage 14,114 is first aligned with the space between any adjacent pair of dividers 36, and any uprights 32 which are located such as to prevent access to the interior of the trailer 12 may be slid out of the way such as to permit the cage 14,114 to be deposited onto the trailer 12. At this point a further cage 14,114 may then be stacked on top of the first cage 14,114, as shown clearly in Figure 3. Once any given section of the trailer 12 has been filled, the adjacent section is subsequently filled, and so on until the entire trailer 12 has been filled, or until all of the cages 14,114 required for transport have been deposited onto the trailer 12, each time moving the respective uprights 32 to permit loading of the various sections via the side of the trailer 12.

At this point, the trailer 12 is ready for transport, and the plurality of cages 14,114 must therefore be secured in place in order to prevent them from becoming dislodged during transit. In order to secure the cages 14,114, a single upright 32 is slid along between the respective upper rail 28 and lower rail 30 and positioned such as to overlie an outer corner of each pair of adjacent cages 14,114, as shown in Figure 4. The upright 32 is then secured in place by means of the locking member 42, as herein before described. This process is repeated until each upright 32 has been located in the correct position. Each upright 32 is wide enough to extend a little way across the frame 20 of each of the adjacent cages 14,114. Thus, in transit, the uprights 32 prevent the adjacent cages 14,114 from falling off the side of the trailer 12. When the trailer 12 has reached its destination, the above process is reversed in order to permit the plurality of cages 14,114 to be unloaded therefrom. Additional uprights 32 could be provided for location, for example, at the midway point of each cage 14, 114, to further secure and retain the cages 14, 114 in position in the trailer 12.

It is also envisaged that each upright 32 need not be secured to both the upper rail 28 and the lower rail 30, and could be secured to one or the other. If this were the case, it would be necessary for the upright (not shown), and the connection between same and the upper rail 28 or lower rail 30, to be sufficiently reinforced to withstand the loading which could be applied thereto in the event of one or more of the cages 14, 114 becoming dislodged and falling/leaning against the upright (not shown). As the upright (not shown) would be secured to the trailer 12 at only one end of the upright, the upright would form a cantilever which, if loaded, would experience a significant bending moment, in addition to applying a significant torque to the connection between the upright and the upper rail 28 or lower rail 30. It is for this reason that, in the preferred embodiment illustrated, each upright 32 is secured to the trailer 12 at both ends of the upright 32.

The present invention therefore provides a relatively simple yet versatile, safe and robust transport system 10 for the transport/storage of, in particular, gas cylinders 44, 46.

## Claims

1. A transport system (10) comprising at least one cage (14; 114) into which a plurality of objects (44; 46) may be loaded, the at least one cage (14; 114) being adapted to be lifted by suitable means; an enclosure (12) into which the at least one cage (14; 114) may be loaded for transport, the enclosure (12) comprising a platform (26) and at least one upright (32) moveable relative to the platform; **characterised by** retaining means (36) in operative association with the platform (26) and adapted to substantially reduce or present relative movement between the at least one cage (14; 114) and the platform (26)

2. A system (10) according to claim 1 in which each cage (14; 114) comprises a base (16; 116) defining at least a pair of channels (18; 118) shaped and dimensioned for receiving a pair of tines of a forklift.

3. A system (10) according to claim 2 in which each cage (14; 114) comprises a frame (20; 120) extending from the base (16; 116), at least one upper edge (24; 124) of the frame (20; 120) having one of a male (48; 148) or a female member, and a corresponding other of the male (48; 148) or female member is provided on an underside of the base (16; 116).

4. A system (10) according to claim 3 in which each pair of male (48; 148) and female members are self aligning.

5. A system (10) according to claim 3 or 4 in which the male (48; 148) and female members each have a substantially V shaped cross section.

6. A system (10) according to any of claims 3 to 5 in which the frame (20; 120) may be opened outwardly on at least one side of the cage (14; 114).

7. A system (10) according to any preceding claim in which the enclosure (12) comprises at least a pair of opposing uprights (32) independently moveable relative to the platform (26).

8. A system (10) according to claim 6 in which the enclosure (12) comprises an upper rail (28) and a lower rail (30), each of which rails (28; 30) are disposed substantially parallel to the platform (26), the or each upright (32) being slidably mounted to the upper rail (28) and the lower rail (30).

9. A system (10) according to claim 7 in which the enclosure (12) comprises a pair of opposed upper rails (28) and a pair of opposed lower rails (30).

10. A system (10) according to claim 8 or 9 in which the or each lower rail (30) is formed integrally with the platform (26).

11. A system (10) according to any preceding claim in which the or each upright (3 2) may be locked in position relative to the platform (26).

12. A system (10) according to any preceding claim in which the retaining means (36) comprises at least a pair of dividers (36) projecting upwardly from the platform (26).

13. A system (10) according to any preceding claim in which the enclosure (12) is mobile.

14. A system (10) according to any preceding claim in which the enclosure (12) is a vehicular trailer (12).

## Patentansprüche

1. Transportsystem (10), das mindestens einen Korb (14; 114) aufweist, in den eine Anzahl von Gegenständen (44, 46) geladen werden kann, wobei der mindestens eine Korb (14; 114) angepasst ist, um durch ein geeignetes Mittel angehoben zu werden; eine Einzäunung (12), in die der mindestens eine Korb (14; 114) zum Transport geladen werden kann;, wobei die Einzäunung (12) eine Plattform (26) und mindestens einen Pfosten (32) aufweist, der in Bezug zu der Plattform bewegt werden kann; **gekennzeichnet durch** Haltemittel (36), die betrieblich mit der Plattform (26) verknüpft und angepasst sind, um relative Bewegung zwischen dem mindestens einen Korb (14; 114) und der Plattform (26) wesentlich zu reduzieren oder zu verhindern.

2. System (10) nach Anspruch 1, bei dem jeder Korb (14; 114) einen Boden (16; 116) aufweist, der mindestens ein Paar von Rillen (18; 118) begrenzt, welche zum Aufnehmen eines Paars von Zinken eines Gabelstaplers geformt und bemessen sind.

3. System (10) nach Anspruch 2, bei dem jeder Korb (14; 114) einen Rahmen (20; 120) aufweist, der sich von dem Boden (16; 116) erstreckt, wobei mindestens eine Oberkante (24; 124) des Rahmens (20; 120) entweder ein männliches (48; 148) oder ein weibliches Element aufweist, und das entsprechende andere des männlichen (48; 148) oder weiblichen Elements auf einer Unterseite des Bodens (16; 116) vorgesehen ist.

4. System (10) nach Anspruch 3, bei dem jedes Paar aus männlichem (48; 148) und weiblichem Element selbstausrichtend ist.

5. System (10) nach Anspruch 3 oder 4, bei dem das männliche (48; 148) und weibliche Element jeweils einen im Wesentlichen V-förmigen Querschnitt aufweisen.

6. System (10) nach einem der Ansprüche 3 bis 5, bei dem der Rahmen (20; 120) auf mindestens einer Seite des Korbs (14; 114) nach außen geöffnet werden kann.

7. System (10) nach einem vorhergehenden Anspruch, bei dem die Einzäunung (12) mindestens ein Paar sich gegenüberstehender Pfosten (32) aufweist, die unabhängig in Bezug zu der Plattform (26) bewegt werden können.

8. System (10) nach Anspruch 6, bei dem die Einzäunung (12) eine obere Schiene (28) und eine untere Schiene (30) aufweist, wobei jede dieser Schienen (28; 30) im Wesentlichen parallel zu der Plattform (26) angeordnet ist, und der oder jeder Pfosten (32) verschiebbar an der oberen Schiene (28) und der unteren Schiene (30) angebracht ist.

9. System (10) nach Anspruch 7, bei dem die Einzäunung (12) ein Paar sich gegenüberstehender oberer Schienen (28) und ein Paar sich gegenüberstehender unterer Schienen (30) aufweist.

10. System (10) nach Anspruch 8 oder 9, bei dem die oder jede untere Schiene (30) mit der Plattform (26) integriert ausgebildet ist.

11. System (10) nach einem vorhergehenden Anspruch, bei dem der oder jeder Pfosten (32) in Bezug zu der Plattform (26) an richtiger Position verriegelt werden kann.

12. System (10) nach einem vorhergehenden Anspruch, bei dem das Haltemittel (36) mindestens ein Paar von Unterteilungen (36) aufweist, die von der Plattform (26) nach oben vorstehen.

13. System (10) nach einem vorhergehenden Anspruch, bei dem die Einzäunung (12) beweglich ist.

14. System (10) nach einem vorhergehenden Anspruch, bei dem die Einzäunung (12) ein Fahrzeuganhänger (12) ist.

## Revendications

1. Système de transport (10) comprenant au moins une cage (14, 114) dans laquelle une pluralité d'objets (44, 46) peuvent être chargés, la au moins une cage (14, 114) étant apte à être soulevée par un moyen adapté ; une enceinte (12) dans laquelle la au moins une cage (14, 114) peut être chargée pour le transport, l'enceinte (12) comprenant une plateforme (26) et au moins un montant (32) mobile par rapport à la plateforme, **caractérisé par** un moyen de retenue (36) en association opérationnelle avec la plateforme (26) et apte à réduire ou empêcher sensiblement le mouvement relatif entre la au moins une cage (14, 114) et la plateforme (26).

2. Système (10) conforme à la revendication 1, où chaque cage (14, 114) comprend une base (16, 116) délimitant au moins une paire de gorges (18, 118) de forme et de dimensions aptes à recevoir une paire de fourches de chariot élévateur.

3. Système (10) conforme à la revendication 2, où chaque cage (14, 114) comprend un cadre (20, 120) s'étendant depuis la base (16, 116), au moins un bord supérieur (24, 124) du cadre (20, 120) étant muni soit d'un élément mâle (48, 148) ou d'un élément femelle, l'autre élément correspondant - l'élément mâle (48, 148) ou femelle - étant prévu sur un dessous de la base (16, 116).

4. Système (10) conforme à la revendication 3, où chaque paire d'éléments mâle (48, 148) et femelle sont à auto-alignement.

5. Système (10) conforme à la revendication 3 ou 4, où les éléments mâle (48, 148) et femelle ont chacun une section transversale sensiblement en forme de V.

6. Système (10) conforme à une quelconque des revendications 3 à 5, où le cadre (20, 120) peut s'ouvrir vers l'extérieur sur au moins un côté de la cage (14, 114).

7. Système (10) conforme à une quelconque des revendications précédentes, où l'enceinte (12) comprend au moins une paire de montants opposés (32) mobiles indépendamment par rapport à la plateforme (26).

8. Système (10) conforme à la revendication 6, où l'enceinte (12) comprend un rail supérieur (28) et un rail inférieur (30), chacun desdits rails (28, 30) étant disposé sensiblement parallèlement à la plateforme (26), le ou chaque montant (32) étant monté de manière à pouvoir glisser sur le rail supérieur (28) et le rail inférieur (30).

9. Système (10) conforme à la revendication 7, où l'enceinte (12) comprend une paire de rails supérieurs opposés (28) et une paire de rails inférieurs opposés (30).

10. Système (10) conforme à la revendication 8 ou 9, où le ou chaque rail inférieur (30) est formé d'une seule pièce avec la plateforme (26).

11. Système (10) conforme à une quelconque des revendications précédentes, où le ou chaque montant (32) peut être verrouillé en place par rapport à la plateforme (26).

12. Système (10) conforme à une quelconque des revendications précédentes, où le moyen de retenue (36) comprend au moins une paire de séparations (36) en saillie vers le haut depuis la plateforme (26).

13. Système (10) conforme à une quelconque des revendications précédentes, où l'enceinte (12) est mobile.

14. Système (10) conforme à une quelconque des revendications précédentes, où l'enceinte (12) est une remorque pour véhicule (12).
